# EUROPÄISCHE PATENTSCHRIFT

(11) **EP 0 976 524 B1**
(45) Veröffentlichungstag und Bekanntmachung des Hinweises auf die Patenterteilung: **01.10.2003**
(21) Anmeldenummer: 98113955.3
(22) Anmeldetag: 25.07.1998
(51) Int. Cl.: B29C 47/08, B29C 45/17, B29C 47/58

(54) **Extruder**
Extruder
Extrudeuse

(43) Veröffentlichungstag der Anmeldung: 02.02.2000
(73) Patentinhaber: Bühler AG, 9240 Uzwil (CH)
(72) Erfinder: Rutishauser, Stefan, 9000 St. Gallen (CH)

(56) Entgegenhaltungen:
- WO-A-96/06721
- DE-B- 1 230 553
- DE-B- 1 268 367
- JP-A- 60 154 026
- US-A- 2 090 434

## Beschreibung

Ein derartiger Extruder ist aus der WO 96/06721 bekannt geworden. Dabei greift der Axialantrieb mit einem Ende an einem Schild an, der mit dem Extrudergetriebe fest verbunden ist, das während des Ausbaues der jeweiligen Schnecke hin- und hergeführt wird. Das Prinzip, das Extrudergetriebe vor- und zurückzuverstellen ist an sich in Fachkreisen ein sehr häufig angewandtes, wie etwa auch die US-A-4,004,787 zeigt, bei der das Extrudergetriebe samt Motor auf einem Wagen gelagert ist, um die andernfalls durch das hohe Gewicht auftretenden Biegemomente abzufangen.

Zwar ist aus der US-A-2,090,434 eine Konstruktion bekannt, die ohne Relativverschiebung von Extrudergehäuse und Extrudergetriebe auskommt, Dabei wird zunächst mittels eines Hebels die Kupplung zwischen den beiden ausgerückt und dann durch weiteren Antrieb der hohl ausgebildeten Schneckenantriebswelle eine darin mit einem Innengewinde derselben in Eingriff stehende, an die Schnecke angekuppelte Gewindespindel angetrieben, die die Schnecke während ihres Antriebes kontinuierlich herausschiebt. Dies erfordert aber die Verwendung einer hohlen Antriebswelle, was - angesichts der heutigen hohen zu übertragenden Energie - untunlich ist, weil es den Querschnitt der Antriebswelle schwächt.

Gerade die US-A-4,004,787 zeigt aber, wie problematisch es ist, Extrudergehäuse und Extrudergetriebe relativ zueinander zu verschieben. Es ist deshalb die der Erfindung zugrundeliegende Aufgabe, einen Extruder der eingangs genannten Art so auszubilden, dass eine Relativverschiebung von Extrudergehäuse und Extrudergetriebe vermieden werden kann. In überraschend einfacher Weise gelingt dies durch die kennzeichnenden Merkmale des Anspruches 1. Dabei wird sich im allgemeinen ein schrittweiser Ausbau, ebenso wie beim Stand der Technik nach der genannten WO ergeben, es sei denn die Schnecke ist entsprechend kurz bzw. der Weg des Schildes ist entsprechend lang.

Die DE 12 68 367 beschreibt eine Vorrichtung zum Ausstossen der Schnecke aus dem Gehäuse eines Extruders. Das Ausstossen der Schnecke aus dem Gehäuse erfolgt nach vorn in Richtung des Vorderendes der Schnecke mittels einer am Hinterende bzw. Antriebsende der Schnecke angreifenden hydraulisch antreibbaren Druckstange. Die Druckstange weist Mitnehmer auf, deren Abstand entlang der Druckstange dem Hub des Hydraulikkolbens des Hydraulikantriebs entspricht. Ein mit dem Kolben z.B. durch Aufschrauben in Längsrichtung starr verbundenes Rastengehäuse weist Rasten auf, die mittels Federbeaufschlagung gegen die Druckstange in Bereichen zwischen den Mitnehmern gedrückt werden und somit an der Druckstange einrasten. Die Mitnehmer der Druckstange sind jeweils in der Längsrichtung entlang der Druckstange in der Ausstossrichtung der Schnecke bis zu einem Anschlag verjüngt ausgebildet, so dass eine Mitnahmewirkung von dem mit dem Rastengehäuse starr verbundenen Kolben über die in die Mitnehmer eingreifenden Rasten nur in der Ausstossrichtung der Schnecke stattfindet.

In der DE 33 31 502 wird eine Vorrichtung zum Ausstossen der Schnecke aus einem Extruder beschrieben, bei der das Extrudergehäuse und das Extrudergetriebe jeweils ortsfest sind. Auf das getriebeabseitige und aus dem Extrudergehäuse herausragende Vorderende der Schnecke wird eine Hülse aufgeschraubt, die auf dem Schneckensteg gewindeartig gleiten kann und dabei in eine Stellung gebracht werden kann, in der sie in der Axialrichtung mit der Schnecke fest verankert ist. An zwei radial gegenüberliegenden Seiten der Hülse greifen hydraulisch angetriebene und am Extrudergehäuse gelagerte Kolbenstangen an, bei deren Ausfahren die Schnecke um eine Kolbenhublänge in die Ausstossrichtung gedrückt werden kann. Die Kolben können dann wieder eingefahren werden und die Hülse um eine Hublänge entlang der Schnecke weiter aufgeschraubt werden, bis die Hülse wieder an den Enden der eingefahrenen Kolben zum Anliegen kommt. Durch erneutes Ausfahren der Kolben wird der Vorgang wiederholt und ein schrittweises Ausstossen der Schnecke ermöglicht.

Wenn die erfindungsgemässe Lösung auch an sich für jede Art von Extruder anwendbar ist, so wird sie bevorzugt an einem solchen mit den Merkmalen des Anspruches 2 angewandt, weil sie wegen der aus ihr resultierenden robusten Konstruktion dort am besten geeignet ist, wo die für den Ausbau nötigen Kräfte besonders gross sind.

Wenn nach einer bevorzugten Ausführungsform der Erfindung die Mitnahmeeinrichtung mindestens zwei auf die jeweilige Längsachse zu bzw. von ihr wegbewegbare Mitnahmebacken aufweist, so können diese Mitnahmebacken entweder als Klemmbacken ausgebildet werden, um am Aussenumfang des ihnen entlang der Längsachse gegenüberliegenden Teils der Schnecke kraftschlüssig anzugreifen, doch ist dies nicht unbedingt erforderlich, ja nicht einmal bevorzugt, vielmehr dienen diese Backen vorteilhaft nur als Ausstosswerkzeuge, die sich an einen radial vorspringenden Teil der Schnecke oder eines eingelegten Zwischenstückes anlehnen und daher nicht an einem Schneckenteil angreifen müssen.

Zur Erzielung einer noch verbesserten Robustheit der Konstruktion ist wenigstens eine Ausgestaltung mit den Merkmalen der Ansprüche 8 bis 10 vorgesehen.

Weitere Einzelheiten ergeben sich an Hand der nachfolgenden Beschreibung eines in der Zeichnung schematisch dargestellten Ausführungsbeispieles. Es zeigen:
- Fig. 1: eine Seitenansicht eines erfindungsgemässen Extruders im normalen Betrieb;
- Fig. 1A: einen vergrösserten Schnitt nach der Linie A-A der Fig. 1; und die
- Fig. 2 - 6: verschiedene Stadien beim Ausbau der aus Fig. 1 ersichtlichen Schnecken.

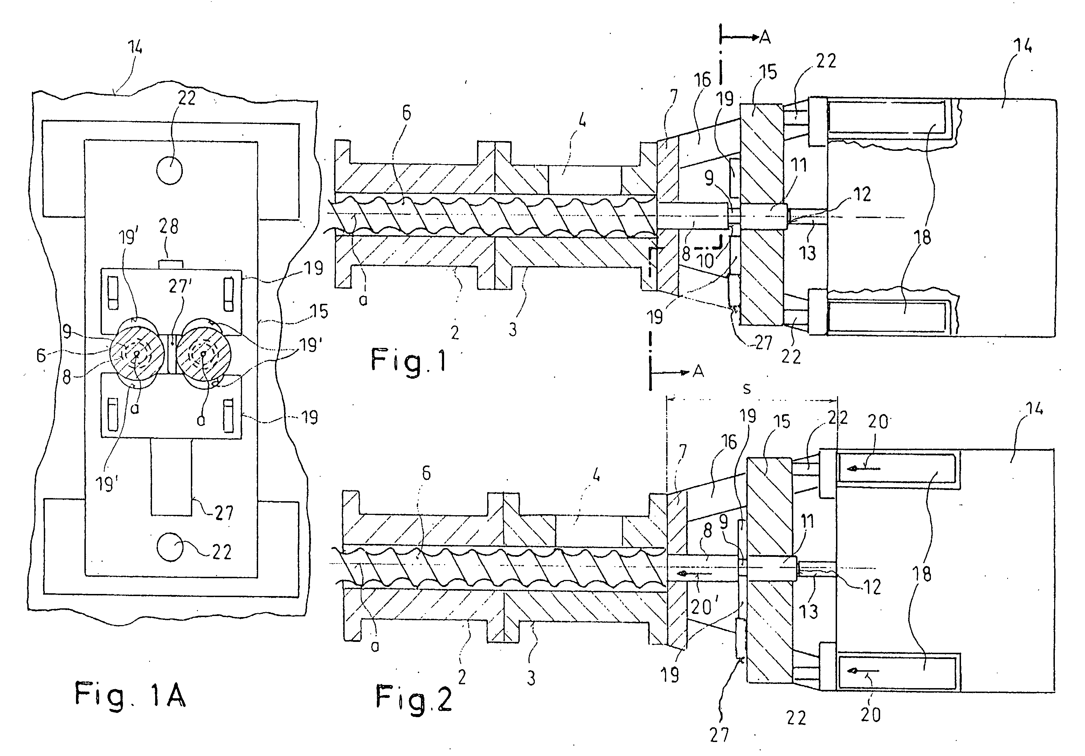

Ein Extruder 1 weist ein Extrudergehäuse 2 auf, das aus einzelnen Modulen, wie einem Zufuhrmodul 3 mit einer Zufuhröffnung 4 und mindestens einem weiteren Modul 5 zusammengesetzt ist. Innerhalb dieses Gehäuses 2 ist mindestens eine Extruderschnecke 6 zu einer Drehung antreibbar. Fig. 1A zeigt im Schnitt nach der Linie A-A, dass es sich - gemäss einer bevorzugten Ausführungsform der Erfindung - um zwei nebeneinanderliegende und gemeinsam angetriebene Schnecken 6 handelt. Jede dieser Schnecken 6 erstreckt sich entlang einer ihr zugehörigen Längsachse a.

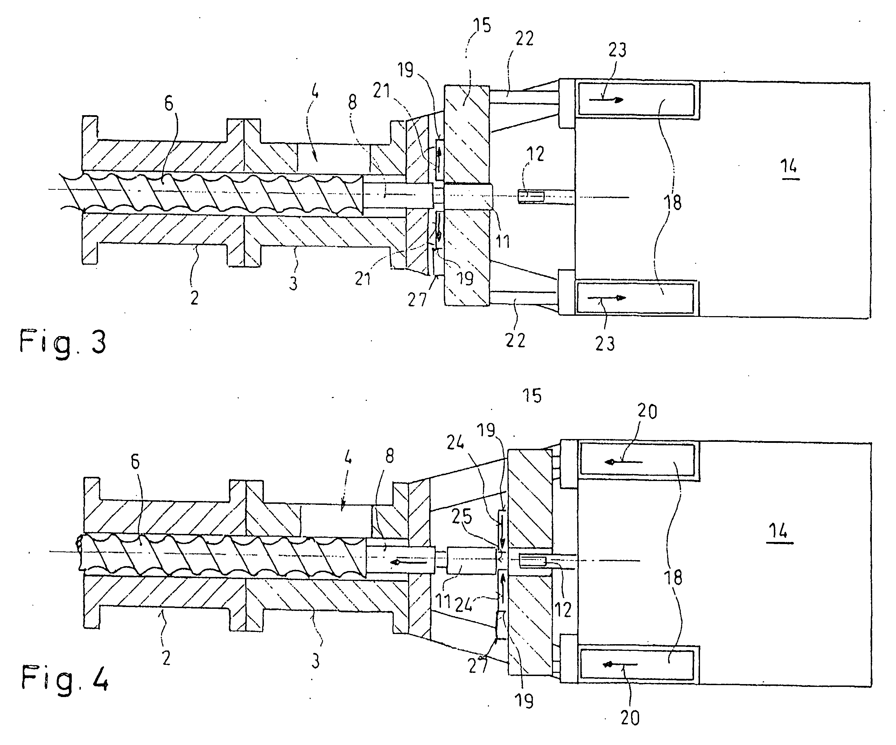

Für die Drehung der Schnecken 6 sind sie in der aus Fig. 1 ersichtlichen Weise in einem Lagerteil 7 gelagert und erstrecken sich als Schneckenwelle 8 durch diesen Lagerteil 7 hindurch. Die Schneckenwelle 8 besitzt einen Einstich 9 reduzierten Durchmessers, so dass am Ende des dickeren Teils der Schneckenwelle 8 jeweils eine sich radial erstreckende Anschlagfläche 10 vorliegt. Anschliessend geht die Schneckenwelle 8 in einen hohlen Kupplungsteil 11 über. Wie später noch an Hand der Fig. 3 beschrieben wird, besitzt der hohle Kupplungsteil 11 einen Hohlquerschnitt, der von der Kreisform abweicht, so dass das einen eben solchen Querschnitt aufweisende Ende 12 einer Antriebswelle 13 aus einer Motor-Getriebeeinheit 14 von diesem Hohlquerschnitt drehschlüssig, aber axial verschiebbar aufgenommen werden kann. Damit ergibt sich bei der Bewegung des Schildes 15 aus der Lage nach Fig. 3 in die nach Fig. 4 eine ähnliche Einkupplungsbewegung, wie sie bei Synchrongetrieben von Autos üblicherweise erfolgt, d.h. das Einkuppeln wird automatisiert. Es versteht sich, dass deshalb alle jene Ausführungsvarianten in Frage kommen, die bei Synchrongetrieben von Autos bekannt sind.

Das Extrudergehäuse 2 mit dem Lagerteil und dem Extrudergetriebe 14 sind ortsfest angeordnet. Es ist vorteilhaft, wenn zwischen dem ortsfesten Extrudergetriebe und dem ortsfesten Extrudergehäuse eine diese beiden Elemente miteinander verbindende Verstrebung 16 vorgesehen ist, die Axialkräfte aufnimmt, wie sie bei den nachfolgend beschriebenen Ausbaubewegungen auftreten. Auf diese Weise bilden die Elemente 2, 7, 14 und 16 eine Einheit.

Zwischen dieser Einheit ist der schon erwähnte bewegliche Schild 15 vorgesehen, dessen Horizontalbewegung durch einen Axialantrieb 17 bewirkt wird. Dieser Axialantrieb kann an sich beliebig ausgebildet sein, beispielsweise auch als eine Gewindespindel antreibender Elektromotor. Bevorzugt ist es jedoch, wenn der Axialantrieb als mindestens ein Kolben-Zylinder-Aggregat 18 ausgebildet ist. Besonders in diesem Fall ist es weiterhin vorteilhaft, wenn der Axialantrieb 18 mindestens zwei an einander gegenüberliegenden Seiten des bewegbaren Schildes 15 angreifende Kolbenstangen 22 mindestens eines Kolben-Zylinder-Aggregates 18 aufweist. Mit einem einzigen Kolben-Zylinder-Aggregat 18 kann dies so durchgeführt werden, dass es sich dabei um einen Ringkolben in einem Ringzylinder handelt, von welchem Kolben dann zwei Kolbenstangen mit einander gegenüberliegenden Seiten des bewegbaren Schildes 15 verbunden sind. Im allgemeinen werden aber separate Einheiten 18 einfacher sein, wie aus der Zeichnung hervorgeht. Sollten auch mehr als zwei Einheiten 18 Verwendung finden, so ist es aus Gründen der Vergleichmässigung der Kräfte vorteilhaft, wenn die Verstrebung 16 an verschiedenen Seiten mindestens eines der beiden von Extrudergehäuse 2 und Extrudergetriebe 14 gebildeten jeweiligen Elemente, insbesondere an in gleichem Winkelabstand bezüglich der jeweiligen Längsachse a gelegenen Seiten, abgestützt ist, d.h. im Falle von nur zwei Streben 16 in einem Winkelabstand von 180°. Es versteht sich, dass diese Zylinder-Aggregate 18 auch an der Seite des Extrudergehäuses 2 angeordnet sein könnten und dann von der anderen Seite her am Schild 15 angreifen; die Anordnung an der Seite des Extrudergetriebes 14 ist aber günstiger und daher bevorzugt.

Bei einer solchen baulichen Ausbildung eines Extruders 1 ergibt sich beim Ausbau der Schnecken nun das folgende Vorgehen.

Ausgehend von der Situation der Fig. 1, wird zunächst einmal der Antrieb 14 abgeschaltet. Sodann werden am Schild 15 geführte Backen 19 (vgl. Fig. 1, 1A) durch einen nicht dargestellten Antrieb, wie einen fluidischen Antrieb 27 (hydraulisch oder pneumatisch), einen Elektroantrieb -od.dgl., aus der von der Achse a entfernten Stellung nach Fig. 1 in die achsnahe Lage nach Fig. 2 gebracht, wo sie in den Einstich 9 eintauchen und damit in Anlage an die Fläche 10 gelangen. Gewünschtenfalls können die Mitnahmebacken 19 auch so weit radial bewegt werden, bis sie kraftschlüssig an der Welle 8, d.h. an der Innenseite des Einstiches 9 oder auch am äusseren Umfang des dicken Teils der Welle 8, angreifen, doch wird dies im allgemeinen nicht erforderlich sein.

Wie aus Fig. 1A hervorgeht, sind die Backen 19 für die beiden Schnecken 6 paarweise einstückig zusammengefasst und können so gemeinsam von oben und ebenso gemeinsam von unten auf die Achsen a zu bewegt werden. Jede Backe 19 besitzt einen etwa halbkreisförmigen (besser: etwas weniger als 180°) Ausschnitt 19', mit dem sie um den verringerten Umfang des Einstiches 9 her in diesen eingreift. Vorzugsweise ist der Zylinder 27 an der einen Backe befestigt und bewegt sich mit dieser, wogegen seine Kolbenstange 27' mit einer Pratze 28 an der oberen Backe 19 angreift. Daher wird den beiden Backen 19 jeweils eine einander entgegengesetzte Bewegung, nämlich zusammen oder auseinander, aufgezwungen. Dazu ist es lediglich erforderlich, (nicht dargestellte) Schlauchanschlüsse für die Zufuhr und Abfuhr von Druckfluid zum Zylinder 27 vorzusehen. Will man dies vermeiden, so könnte der Zylinder auch ortsfest am Schild 15 befestigt und ein Umkehrgetriebe für eine der Backen 19 vorgesehen werden.

Wenn nun anschliessend der Axialantrieb 18 im Sinne der Pfeile 20 betätigt wird, so stossen die Backen 19 gegen die Fläche 10 des Einstiches 9 und bewegen die Extruderwelle 8 im Sinne des Pfeiles 20' um den Hub der Kolben-Zylinder-Aggregate 18 (bezogen auf die Zeichnung) nach links.

Sobald der Hub der Aggregate 18 ausgeschöpft ist, werden die Backen 19 wieder aus dem Einstich 9 radial nach aussen gezogen (Pfeile 21 in Fig. 3), so dass die Mitnahmeverbindung zwischen dem Schild 15 und der Extruderwelle 8 gelöst ist. Anschliessend werden die Kolbenstangen 22 der Aggregate 18 wieder im Sinne der Pfeile 23 eingezogen. Diese Kolbenstangen 22 greifen vorzugsweise an einander gegenüberliegenden Seiten des Schildes 15 an., wie besonders aus Fig. 1A ersichtlich ist. Sollten mehr als zwei Aggregate 18 vorgesehen sein, so werden die Kolbenstangen vorteilhaft in wenigstens annähernd gleichen Winkelabständen um die Längsachse(n) a der Extruderwellen 8 herum verteilt, um die auf den Schild 15 wirkenden Kräfte beim Ausbau zu vergleichmässigen.

Nun befindet sich die Extruderwelle entweder mit dem Kupplungsteil 11 oder einem entsprechenden, normalerweise im Schild 15 liegenden und axial gegen eine Längsverschiebung gegenüber der Welle 8 gesicherten Wellenlager in der Stellung nach Fig. 4. Ist die Kupplungshülse 11 (oder ein entsprechendes Wellenlager) etwa entsprechend der Grösse des Hubes des Axialantriebes 18 bemessen (gegebenenfalls auch etwas kürzer), so können die Backen dahinter wieder zusammengefahren werden, wie dies die Pfeile 24 veranschaulichen. Bei grösserer Länge des Kupplungsteiles 11 würden diese Backen 19 kraftschlüssig an seinem Aussenumfang angreifen müssen. Tauchen sie aber hinter dem Kupplungsteil 11 ein, so bildet seine Stirnfläche 25 wieder einen Anschlag für die Mitnahme durch die Backen 19 beim nächsten Hub des Axialantriebes 18 im Sinne der Pfeile 20.

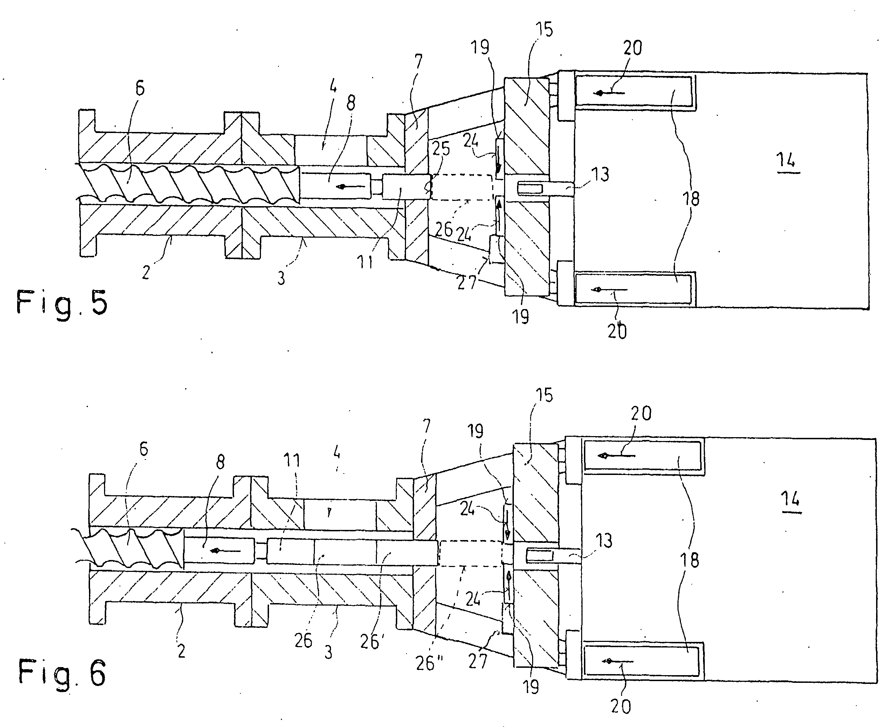

Auf diese Weise lassen sich also kurze Schnecken 6 in zwei Schritten aus dem Gehäuse 2 ausstossen. Eine noch kürzere Schnecke gegebenenfalls praktisch kontinuierlich in einer einzigen Bewegung. Massgebend ist hierfür einerseits die Länge der Schnecke 6 bzw. ihrer Welle 8 und anderseits die Grösse des Hubes des Axialantriebes 18, 22. Entsprechend ist natürlich auch der Zwischenraum s (Fig. 2) zwischen Extrudergehäuse 2 und Extrudergetriebe 14 zu bemessen. Sollte aber die Schnecke 6 länger sein, wie dies aus der Zeichnung ersichtlich ist, so kann als nächstes ein Zwischenstück 26 (Fig. 5) an die Stirnfläche 25 angesetzt werden, um die Schneckenwelle 8 nach dem Zusammenfahren der Backen um ein weiteres Stück vorzuschieben (nach links in den Figuren). Es versteht sich, dass das Zwischenstück 26 zweckmässig wiederum eine dem Hub des Axialantriebes entsprechende Länge besitzt. Dieser Vorgang kann beliebig oft wiederholt werden, wie an Hand der Fig. 6 mit weiteren Zwischenstücken 26', 26" ersichtlich ist, bis die Schneckenwelle ausgebaut ist.

Es versteht sich, dass im Rahmen der Erfindung verschiedene Abwandlungen denkbar sind; beispielsweise braucht die jeweilige Schnecke 6 nicht in der dargestellten Ausführung ausgebildet sein, sondem kann Knetelemente, Scherelemente, Messerelemente, Rührelemente usw. aufweisen. An Stelle der dargestellten, relativ einfachen Kupplungseinrichtung kann auch jede andere Kupplungseinrichtung Verwendung finden, wie sie aus dem Stand der Technik bekannt ist. An Stelle von Backen 19 kann auch jede andere Mitnahmeeinrichtung, wie einschwenkbare Haken usw., Anwendung finden, die gegebenenfalls auch drehbar aber axial unverschieblich an der Welle 8 vorgesehen sein kann.

## Patentansprüche

1. Extruder (1) mit mindestens einer sich entlang einer Längsachse (a) erstreckenden Schnecke (6) in einem Extrudergehäuse (2), die über eine aus einer Kupplungslage in eine entkuppelte Lage bringbare Kupplungseinrichtung (11) an ein Extrudergetriebe (14) ankuppelbar ist, und mit einer Schneckenausbauvorrichtung (15, 18, 19, 22), die einen Axialantrieb (18, 22) zum, beispielsweise schrittweisen, Ausbau der jeweiligen Schnecke (6) aus dem Extrudergehäuse (2) nach bzw. mit dem Entkuppeln der Kupplungseinrichtung (11) aufweist, welcher Axialantrieb (18, 22) mit einem Ende an einem Schild (15) angreift, wogegen das andere Eride ortsfest gelagert ist, **dadurch gekennzeichnet, dass** der Schild (15) mit Hilfe des Axialantriebes (18, 22) bewegbar zwischen dem ortsfesten Extrudergetriebe (14) und dem ebenfalls ortsfesten Extrudergehäuse (2) in einem die, z.B. schrittweise, Ausbaubewegung ermöglichenden Zwischenraum (s) dazwischen angeordnet ist, und dass der Schild (15) eine Mitnahmeeinrichtung zum Erfassen und Ausstossen der jeweiligen Extruderschnecke (6) aufweist, der getriebeseitige Endbereich (8, 9, 10, 11) der Schneckenwelle (8) einen Einstich (9) reduzierten Durchmessers aufweist, in den die am Schild (15) geführte Mitnahmeeinrichtung (19) durch einen Antrieb (27) eingetaucht werden kann.

2. Extruder nach Anspruch 1, **dadurch gekennzeichnet, dass** er mindestens zwei Schnecken (6) in einem gemeinsamen Extrudergehäuse (2) aufweist.

3. Extruder nach Anspruch 1 oder 2, **dadurch gekennzeichnet, dass** mindestens zwei auf die jeweilige Längsachse zu bzw. von ihr wegbewegbare Mitnahmebacken (19) ein einziger Antrieb (27) für beide Mitnahmebacken (19) vorgesehen ist, insbesondere ein an einer der Backen (19) befestigter und mit ihr bewegbarer Zylinder (27), dessen Kolbenstange (27') an der anderen Backe (19) zur entgegengesetzten Bewegung angreift.

4. Extruder nach den Ansprüchen 2 und 3, **dadurch gekennzeichnet, dass** die Mitnahmebacken (19) jeweils einstückig zur gleichzeitigen Bewegung auf die Längsachsen (a) der mindestens zwei Schnecken (6) ausgebildet sind (Fig. 1A).

5. Extruder nach einem der vorhergehenden Ansprüche, **dadurch gekennzeichnet, dass** die Kupplungseinrichtung (11) oder ein im Schild (15) vorgesehenes, an der Extruderwelle (8) gegen das Extrudergetriebe (14) hin unverschieblich angeordnetes Lager eine dem Hub des Axialantriebes (18, 22) entsprechende Länge besitzt.

6. Extruder nach einem der vorhergehenden Ansprüche, **dadurch gekennzeichnet, dass** der Axialantrieb (18, 22) am ortsfesten Extrudergetriebe (14) gelagert ist.

7. Extruder nach einem der vorhergehenden Ansprüche, **dadurch gekennzeichnet, dass** der Axialantrieb (18, 22) mindestens zwei an einander gegenüberliegenden Seiten des bewegbaren Schildes (15) bzw. in gleichen Winkelabständen bezüglich der Längsachse(n) (a) angreifende Kolbenstangen (22) mindestens eines Kolben-Zylinder-Aggregates (18) aufweist.

8. Extruder nach einem der vorhergehenden Ansprüche, **dadurch gekennzeichnet, dass** zwischen dem ortsfesten Extrudergetriebe (14) und dem ortsfesten Extrudergehäuse (2) eine diese beiden Elemente (14, 2) miteinander verbindende Verstrebung (16) vorgesehen ist.

9. Extruder nach Anspruch 9, **dadurch gekennzeichnet, dass** die Verstrebung (16) an verschiedenen Seiten mindestens eines der beiden jeweiligen Elemente (14, 2), insbesondere an in gleichem Winkelabstand bezüglich der jeweiligen Längsachse (a) gelegenen Seiten, abgestützt ist.

## Claims

1. An extruder (1) with at least one screw (6) in an extruder casing (2) extending along a longitudinal axis (a), which can be coupled to an extruder gearing (14) by means of a coupling device (11) that can be brought from a coupled position to a decoupled position, and with a screw expansion system (15, 18, 19, 22), which has an axial drive (18, 22) to, for example, incrementally expand the respective screw (6) from the extruder casing (2) after or simultaneously with the decoupling of the coupling device (11), whose axial drive (18, 22) engages a sign (15) at one end, while the other end is fixed in place, **characterized in that** the sign (15) can be moved by means of the axial drive (18, 22) between the fixed extruder gearing (14) and the also fixed extruder casing (2) in an intermediate space (s) that enables the, for example, incremental expanding motion, and that the sign (15) has a carrier device to acquire and eject the respective extruder screw (6), the gearing-side end area (8, 9, 10, 11) of the screw shank (8) has a recess (9) with a reduced diameter, in which the carrier device (19) run on the sign (15) can be immersed by a drive (27).

2. The extruder according to claim 1, **characterized in that** it has at least two screws (6) in a shared extruder casing (2).

3. The extruder according to claim 1 or 2, **characterized in that** at least two carrier jaws (19) that can move to and fro on the respective longitudinal axes are provided, along with a single drive (27) for both carrier jaws (19), in particular a cylinder (27) secured to one of the jaws (19) that can move along with it, whose plunger rod (27') engages the other jaw (19) for the opposite movement.

4. The extruder according to claims 2 and 3, **characterized in that** the carrier jaws (19) are each designed as a single piece for the simultaneous movement on the longitudinal axes (a) of the at least two screws (6) (Fig. 1A).

5. The extruder according to one of the preceding claims, **characterized in that** the coupling device (11) or a bearing provided in the sign (15) and situated on the extruder shank (8) so that it cannot be shifted toward the extruder gearing (14) has a length corresponding to the stroke of the axial drive (18, 22).

6. The extruder according to one of the preceding claims, **characterized in that** the axial drive (18, 22) is mounted on the fixed extruder drive (14).

7. The extruder according to one of the preceding claims, **characterized in that** the axial drive (18, 22) has at least two plunger rods (22) of at least one piston-cylinder assembly (18) that engage opposing sides of the movable sign (15) or at identical angular distances relative to the longitudinal axis (axes) (a).

8. The extruder according to one of the preceding claims, **characterized in that** a brace (16) is provided between the fixed extruder gearing (14) and the fixed extruder casing (2) and connects these two elements (14, 2) with each other.

9. The extruder according to claim 9, **characterized in that** the brace (16) is supported on various sides of at least one of the two respective elements (14, 2), in particular on sides that are situated at the same angular distance relative to the respective longitudinal axis (a).

## Revendications

1. Extrudeuse (1) comportant au moins une vis sans fin (6) s'étendant le long d'un axe longitudinal (a) dans une carcasse d'extrudeuse (2), qui peut être accouplée, par l'intermédiaire d'un dispositif de couplage (11) pouvant être permuté d'une position accouplée à une position désaccouplée, à un organe de commande de l'extrudeuse (14), et un dispositif d'extraction de la vis sans fin (15, 18, 19, 22) qui présente une propulsion axiale (18, 22) pour l'extraction, par exemple par étapes, de la vis sans fin respective (6) de la carcasse de l'extrudeuse (2) après ou pendant le désaccoupplement du dispositif de couplage (11), laquelle propulsion axiale (18, 22) s'engrène par une extrémité à une plaque (15) contre laquelle est positionnée à un emplacement fixe l'autre extrémité, **caractérisée en ce que** la plaque (15) est disposée dans l'intervalle de manière mobile à l'aide de la propulsion axiale (18, 22) entre l'organe de commande fixe de l'extrudeuse (14) et la carcasse également fixe de l'extrudeus (2) dans un intervalle (s) permettant, par exemple par étapes, le mouvement d'extraction, et que la plaque (15) présente un dispositif d'entraînement servant à saisir et à éjecter la vis sans fin respective (6) de l'extrudeuse, que la zone extrême côté commande (8, 9, 10, 11) de l'arbre de la vis sans fin (8) présente un perçage (9) de diamètre réduit dans lequel peut être enfoncé, grâce à un organe de commande (27), le dispositif d'entraînement (19) guidé sur la plaque (15).

2. Extrudeuse selon la revendication 1, **caractérisée en ce qu'**elle présente au moins deux vis sans fin (6) dans une carcasse commune d'extrudeuse (2).

3. Extrudeuse selon la revendication 1 ou 2, **caractérisée en ce que**, pour au moins deux mâchoires d'entraînement (19) éloignables sur l'axe longitudinal respectif ou de celui-ci, il est prévu un seul organe de commande (27) pour les deux mâchoires d'entraînement (19), notamment un cylindre (27) fixé sur une des mâchoires (19) et déplaçable avec celle-ci, dont la tige de piston (27') s'engrène sur l'autre mâchoire (19) pour le mouvement inverse.

4. Extrudeuse selon les revendications 2 et 3, **caractérisée en ce que** les mâchoires d'entraînement (19) sont conformées respectivement en une pièce pour un mouvement simultané sur les axes longitudinaux (a) des au moins deux vis sans fin (6) (figure 1A).

5. Extrudeuse selon l'une quelconque des revendications précédentes, **caractérisée en ce que** le dispositif de couplage (11) ou un palier prévu dans la plaque (15) et disposé de manière non mobile sur l'arbre de l'extrudeuse (8) contre l'organe de commande de l'extrudeuse (14) possède une longueur équivalant à la course de la propulsion axiale (18, 22).

6. Extrudeuse selon l'une quelconque des revendications précédentes, **caractérisée en ce que** la propulsion axiale (18, 22) est disposée sur l'organe de commande fixe de l'extrudeuse (14).

7. Extrudeuse selon l'une quelconque des revendications précédentes, **caractérisée en ce que** la propulsion axiale (18, 22) présente au moins deux tiges de piston (22) d'au moins un agrégat piston-cylindre (18), s'engrenant sur les faces opposées de la plaque mobile (15) ou dans des écarts angulaires égaux par rapport à l'axe(aux axes) longitudinal (aux) (a).

8. Extrudeuse selon l'une quelconque des revendications précédentes, **caractérisée en ce qu'**entre l'organe de commande fixe de l'extrudeuse (14) et la carcasse fixe de l'extrudeuse (2), est prévu un renfort (16) reliant ces deux éléments (14, 2).

9. Extrudeuse selon la revendication 9, **caractérisée en ce que** le renfort (16) s'appuie sur différentes faces d'au moins un des deux éléments respectifs (14, 2), notamment sur les faces situées dans un écart angulaire égal par rapport à l'axe longitudinal respectif (a).
